# FASCICULE DE BREVET EUROPEEN

(11) **EP 0 537 045 B1**
(45) Date de publication et mention de la délivrance du brevet: **06.03.1996**
(21) Numéro de dépôt: 92402614.9
(22) Date de dépôt: 23.09.1992
(51) Int. Cl.: C09K 5/04, C09K 3/30, C08J 9/14

(54) **Mélange azéotropique contenant du 1,1,1-trifluoroéthane, du perfluoropropane et du propane**
Azeotropische Mischung die 1,1,1-Trifluorethan, Perfluorpropan und Propan enthält
Azeotropic mixture containing 1,1,1-trifluoroethane, perfluoropropane and propane

(30) Priorité: 09.10.1991 FR 9112439
(43) Date de publication de la demande: 14.04.1993
(73) Titulaire: ELF ATOCHEM S.A., F-92800 Puteaux (FR)
(72) Inventeur: Macaudiere, Sylvie, F-92600 Asnieres (FR); Tanguy, Jean-Claude, F-95110 Sannois (FR)
(74) Mandataire: Leboulenger, Jean

(56) Documents cités:
- EP-A- 419 042
- EP-A- 0 314 978
- EP-A- 0 315 069
- EP-A- 0 349 647
- EP-A- 0 427 604
- EP-A- 0 430 170
- FR-A- 1 542 023
- FR-A- 2 361 454

## Description

La présente invention concerne des mélanges de fluides frigorigènes à bas point d'ébullition, n'ayant pas ou peu d'action sur l'environnement et destinés à remplacer les chlorofluorocarbures (CFC) dans les systèmes de réfrigération basse température à compression.

Il est maintenant établi qu'à cause de leur coefficient important d'action sur l'ozone, les CFC seront, à plus ou moins longue échéance, remplacés par des fluides frigorigènes ne contenant plus de chlore et, de ce fait, moins agressifs vis-àvis de l'environnement.

Pour résoudre ce problème, la demande de brevet EP 0 419 042 propose l'emploi d'une composition à trois composants dans laquelle le composant majoritaire est le chlorodifluorométhane ou le pentafluoroéthane, le second composant étant du pentafluoroéthane ou du perfluoropropane, et le troisième du propane. Quand le second composant est le perfluoropropane, la teneur pondérale en composant majoritaire est de préférence comprise entre 83 et 93% dans le cas du chlorodifluorométhane ou entre 80 et 90% dans le cas du pentafluoroéthane (colonne 3, lignes 13-22).

Pour résoudre le même problème dans le domaine des propulseurs d'aérosols, le brevet FR 2 361 454 préconise l'emploi d'un mélange comprenant:
- un chlorofluorocarbure ou fluorocarbure contenant de l'hydrogène choisi parmi les composés CHClF₂, CH₂F₂ et CF₃-CH₃
- un chlorofluorocarbure ou fluorocarbure contenant de l'hydrogène choisi parmi les composés CH₂ClF, CClF₂-CHClF, CF₃-CHClF, CHF₂-CClF₂, CHClF-CHF₂, CF₃-CH₂Cl, CHF₂-CHF₂, CF₃-CH₂F, CClF₂-CH₃ et CHF₂-CH₃, et éventuellement
- un hydrocarbure saturé choisi parmi le n-butane, l'isobutane, le pentane et les isopentanes.

Le 1,1,1-trifluoroéthane (HFA 143a), le perfluoropropane (HFA 218) et le propane (R 290) ont, comparativement aux composés totalement halogénés, une très faible action sur l'environnement. Cependant, leur utilisation en réfrigération se traduit par une puissance frigorifique relativement faible, un taux de compression élevé et, par conséquent, des coûts d'exploitation élevés.

Il a maintenant été trouvé que les mélanges contenant en masse 25 à 65 % de HFA 143a, 1 à 70 % de HFA 218 et 5 à 34 % de R 290 présentent, comparativement aux constituants individuels, une puissance frigorifique considérablement plus élevée avec des taux de compression plus faibles.

Il a également été trouvé que les trois constituants ensemble forment un azéotrope à point d'ébullition minimum égal à -54,7°C sous 1,013 bar et dont la teneur en HFA 218 au point d'ébullition normal est de 30,3 % en masse, celle en R 290 de 22,3 % et celle en HFA 143a de 47,4 %. Bien entendu, cette composition varie en fonction de la pression du mélange.

D'autre part, pour des fractions massiques de HFA 143a comprises entre 35 et 59 %, de R 290 comprises entre 12 et 31 % et de HFA 218 comprises entre 10 et 53 %, les mélanges présentent un comportement pseudo-azéotropique.

Du fait de leur bas point d'ébullition, les mélanges selon l'invention peuvent être utilisés comme fluides frigorigènes dans les applications aux basses températures d'ébullition (-40°C ; -50°C) comme dans le cas de la réfrigération industrielle ou commerciale basse température. Un mélange frigorigène tout particulièrement préféré est l'azéotrope décrit plus haut.

Compte-tenu de leurs propriétés physiques proches de celles des CFC, les mélanges selon l'invention peuvent également être utilisés comme propulseurs d'aérosols ou comme agents d'expansion des mousses plastiques.

Les exemples suivants illustrent l'invention, sans la limiter.

### EXEMPLE 1

L'azéotrope HFA 143a/R 290/HFA 218 a été mis en évidence expérimentalement en mesurant la température d'ébullition sous 1,013 bar de différents mélanges de HFA 143a, R 290 et HFA 218.

Les pressions ont été mesurées avec une précision supérieure à 0,005 bar au moyen d'un manomètre HEISE. Les températures ont été ajustées par pas de 0,1°C afin d'atteindre une pression de 1,013 bar.

Les points normaux d'ébullition ainsi déterminés pour différentes compositions en HFA 143a, R 290 et HFA 218 sont indiqués dans le tableau suivant :

**TABLEAU 1**

| COMPOSITION DU MELANGE (% masse) | | | TEMPERATURE D'EBULLITION SOUS 1,013 BAR (°C) |
|---|---|---|---|
| HFA 143a | R 290 | HFA 218 | |
| 100 | 0 | 0 | - 47,3 |
| 70,6 | 29,4 | 0 | - 53,4 |
| 39,05 | 30,35 | 30,6 | - 54,6 |
| 35,9 | 19,8 | 44,3 | - 54,6 |
| 46,7 | 22,6 | 30,7 | - 54,7 |
| 44,7 | 19,0 | 36,3 | - 54,7 |
| 56 | 19,4 | 24,6 | - 54,7 |
| 63,9 | 20,8 | 15,3 | - 54,3 |
| 50,5 | 13,4 | 36,1 | - 54,6 |
| 61,3 | 9,65 | 29,05 | - 53,8 |
| 40,7 | 9,35 | 49,95 | - 54,3 |

Une représentation graphique (diagramme ternaire) des résultats de ce tableau met en évidence un minimum du point d'ébullition normal pour une fraction massique de HFA 143a égale à environ 44-56,5 %, de R 290 égale à environ 18,5-23 % et de HFA 218 égale à environ 20,5-37,5 %.

D'autre part, on remarque que, pour des fractions massiques en HFA 143a de 35 à 59 %, en R 290 de 12 à 31 % et en HFA 218 de 10 à 53 %, le mélange se comporte comme un quasi-azéotrope.

Le tableau 2 suivant donne la relation pression/température pour un mélange contenant en masse 47,4 % de HFA 143a, 22,3 % de R 290 et 30,3 % de HFA 218, comparée à celle des corps purs.

**TABLEAU 2**

| TEMPERATURE (°C) | PRESSION ABSOLUE (BAR) | | | |
|---|---|---|---|---|
| | Mélange HFA 143a/HFA 218/R 290 | HFA 143a pur | HFA 218 pur | R 290 pur |
| - 40 | 1,94 | 1,42 | 0,87 | 1,08 |
| - 20 | 4,10 | 3,17 | 2,04 | 2,41 |
| 0 | 7,72 | 6,21 | 4,16 | 4,72 |
| + 20 | 13,29 | 11,04 | 7,67 | 8,40 |
| + 40 | 21,31 | 18,27 | 12,98 | 13,82 |

La tension de vapeur de l'azéotrope reste sur une large gamme de température supérieure à la tension de vapeur des corps purs. Ces données indiquent que le mélange reste azéotropique dans tout cet intervalle de température.

### EXEMPLE 2

Cet exemple illustre l'utilisation des mélanges selon l'invention comme fluides frigorigènes.

Les performances thermodynamiques de différents mélanges selon l'invention ont été comparées aux performances des trois constituants seuls et à celles du CFC 502 (mélange azéotropique contenant en masse 48,8 % de chlorodifluorométhane et 51,2 % de chloropentafluoroéthane), dans des conditions proches de celles rencontrées dans les systèmes de réfrigération commerciale, à savoir les suivantes :
. température de condensation : + 30°C
. température d'évaporation : - 40°C
. sous-refroidissement liquide : - 10°C
. surchauffe des vapeurs à l'aspiration du compresseur : + 30°C

Le tableau 3 résume les performances thermodynamiques observées dans ces conditions pour le HFA 143a pur, le R 290 pur, le HFA 218 pur, sept mélanges selon l'invention et le CFC 502.

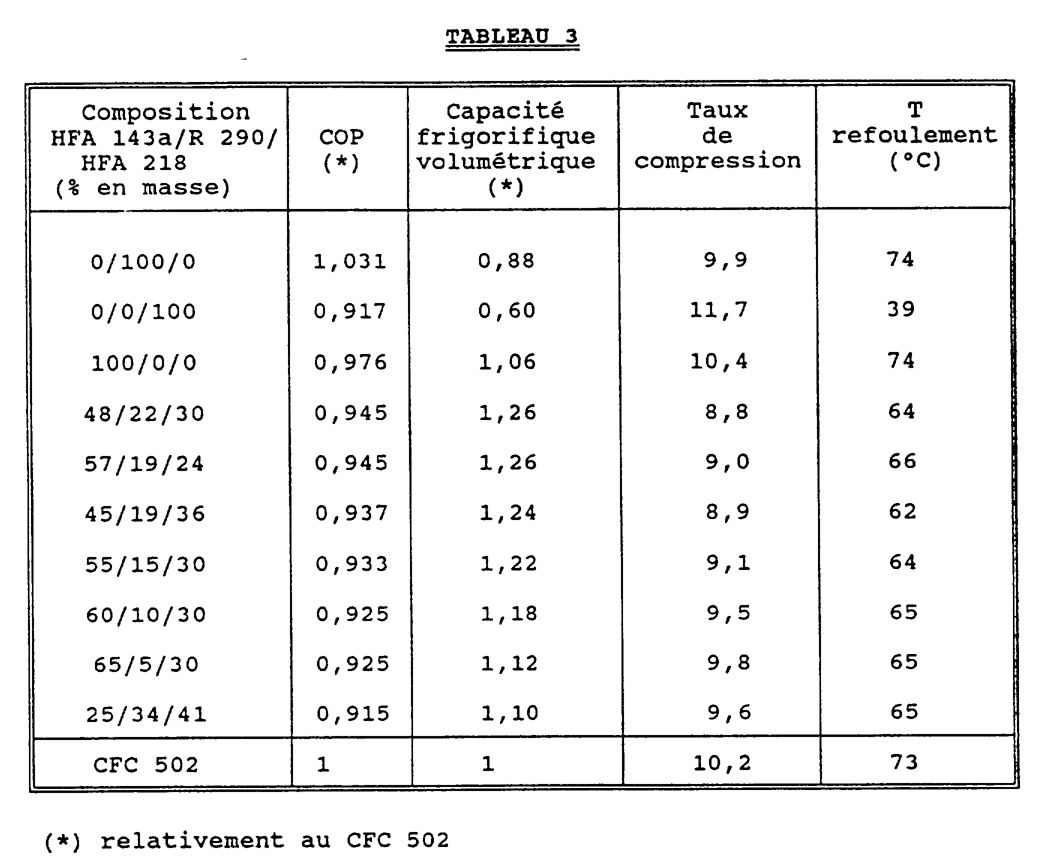

On peut observer que les mélanges selon l'invention offrent un certain nombre d'avantages sur le HFA 143a pur, le R 290 pur, le HFA 218 pur ou le CFC 502, notamment :
. un taux de compression plus faible, améliorant le rendement volumétrique du compresseur et entraînant de ce fait des coûts moindres d'exploitation de l'installation ;
. une température en sortie de compresseur plus faible d'environ 10°C par rapport au CFC 502 ou au HFA 143a, ce qui favorise la bonne stabilité du mélange dans un circuit frigorifique ;
. une puissance frigorifique volumétrique disponible considérablement plus élevée, ce qui pratiquement, pour une puissance frigorifique donnée, permet l'utilisation d'un compresseur plus petit que celui défini pour utiliser le HFA 143a pur ou le CFC 502.

Cet accroissement de puissance frigorifique volumétrique disponible, dans le cas de l'azéotrope selon l'invention, permet également d'accroître de 26 **%** la puissance frigorifique disponible d'une installation déjà existante définie au CFC 502.

## Revendications

1. Mélange contenant en masse 25 à 65 % de 1,1,1-trifluoroéthane, 1 à 70 % de perfluoropropane, et 5 à 34 % de propane.

2. Mélange selon la revendication 1, contenant en masse 35 % à 59 % de 1,1,1-trifluoroéthane, 10 à 53 % de perfluoropropane et 12 à 31 % de propane.

3. Mélange selon la revendication 2, caractérisé en ce qu'il contient en masse 47,4 % de 1,1,1-trifluoroéthane, 30,3% de perfluoropropane et 22,3% de propane, et correspond à un mélange azéotropique à bas point d'ébullition minimal (-54,7°C sous 1,013 bar).

4. L'utilisation d'un mélange selon l'une des revendications 1 à 3 comme fluide frigorigène.

5. L'utilisation d'un mélange selon l'une des revendications 1 à 3 comme propulseur d'aérosols.

6. L'utilisation d'un mélange selon l'une des revendications 1 à 3 comme agent d'expansion des mousses plastiques.

## Patentansprüche

1. Zusammensetzung, enthaltend 25 bis 65 Gew.-% 1,1,1-Trifluorethan, 1 bis 70 Gew.-% Perfluorpropan und 5 bis 34 Gew.-% Propan.

2. Zusammensetzung nach Anspruch 1, enthaltend 35 bis 59 Gew.-% 1,1,1-Trifluorethan, 10 bis 53 Gew.-% Perfluorpropan und 12 bis 31 Gew.-% Propan.

3. Zusammensetzung nach Anspruch 2, dadurch gekennzeichnet, daß sie 47,4 Gew.-% 1,1,1-Trifluorethan, 30,3 Gew.-% Perfluorpropan und 22,3 Gew.-% Propan enthält und einer azeotropen Mischung mit möglichst niedrigem Siedepunkt entspricht (-54,7 °C bei 1,013 bar).

4. Verwendung einer Mischung nach einem der Ansprüche 1 bis 3 als Kältemittel.

5. Verwendung einer Mischung nach einem der Ansprüche 1 bis 3 als Treibmittel.

6. Verwendung einer Mischung nach einem der Ansprüche 1 bis 3 als Auf-schäummittel für Kunststoffmassen.

## Claims

1. Mixture containing, on a mass basis, 25 to 65 % of 1,1,1-trifluoroethane, 1 to 70 % of perfluoropropane and 5 to 34 % of propane.

2. Mixture according to Claim 1, containing, on a mass basis, 35 % to 59 % of 1,1,1-trifluoroethane, 10 to 53 % of perfluoropropane and 12 to 31 % of propane.

3. Mixture according to Claim 2, characterized in that it contains, on a mass basis, 47.4 % of 1,1,1-trifluoroethane, 30.3 % of perfluoropropane and 22.3 % of propane, and corresponds to an azeotropic mixture with a minimum boiling point (-54.7°C at 1.013 bar).

4. Use of a mixture according to one of Claims 1 to 3 as refrigerant fluid.

5. Use of a mixture according to one of Claims 1 to 3 as aerosol propellant.

6. Use of a mixture according to one of Claims 1 to 3 as blowing agent for plastic foams.
